# EUROPÄISCHE PATENTSCHRIFT

(11) **EP 2 694 210 B1**
(45) Veröffentlichungstag und Bekanntmachung des Hinweises auf die Patenterteilung: **27.03.2019**
(21) Anmeldenummer: 12712277.8
(22) Anmeldetag: 03.04.2012
(51) Int. Cl.: B01J 31/02, B01J 27/26, C08G 59/68, C08G 65/12

(54) **KATALYSATOR ZUR EPOXIDPOLYMERISATION UND ZUR COPOLYMERISATION VON EPOXID MIT KOHLENDIOXID**
CATALYST FOR THE POLYMERISATION OF AN EPOXIDE AND THE COPOLYMERISATION OF AN EPOXIDE AND CARBON DIOXIDE
CATALYSEUR POUR LA POLYMERISATION D'UN EPOXYDE ET LA COPOLYMERISATION D'UN EPOXYDE AVEC DU DIOXYDE DE CARBONE

(30) Priorität: 04.04.2011 DE 102011006730
(43) Veröffentlichungstag der Anmeldung: 12.02.2014
(73) Patentinhaber: Henkel AG & Co. KGaA, 40589 Düsseldorf (DE)
(72) Erfinder: ZANDER, Lars, 41569 Rommerskirchen (DE); KUNZE, Christiane, 51061 Köln (DE); KLEIN, Johann, 40593 Düsseldorf (DE); PAETZOLD, Eckhard, 18184 Broderstorf (DE); MARQUARDT, Marion, 18069 Rostock (DE); KRAGL, Udo, 18198 Kritzmow (DE)
(86) Internationale Anmeldenummer: PCT/EP2012/056077
(87) Internationale Veröffentlichungsnummer: WO 2012/136658

(56) Entgegenhaltungen:
- EP-A1- 0 892 002
- EP-A1- 1 022 300
- EP-A1- 1 568 414
- EP-A1- 1 733 788
- EP-A2- 0 222 453
- WO-A1-2007/043062
- US-A1- 2007 191 216

## Beschreibung

Die vorliegende Erfindung liegt auf dem Gebiet der Katalysatoren, wie sie zum Beispiel in Verfahren zur Polymerherstellung Verwendung finden. Die Erfindung betrifft insbesondere Katalysatoren auf Basis von Doppelmetallcyanidverbindungen und schlägt einen neuen derartigen Katalysator vor.

Doppelmetallcyanidkomplexverbindungen (DMC-Komplexverbindungen) sind als Katalysatoren, beispielsweise für die Polymerisation von Epoxiden, grundsätzlich bekannt. Zum Beispiel können Polyether, die sich durch eine besonders enge Molmassenverteilung, durch eine hohe mittlere Molmasse und durch eine sehr niedrige Zahl an Doppelbindungen an den Enden der Polymerketten auszeichnen, unter Verwendung derartiger Katalysatoren hergestellt werden. DMC-Katalysatoren können jedoch auch zur Herstellung anderer Polymere, beispielsweise von Polyestern, eingesetzt werden.

Ein zunehmendes Interesse besteht an Verfahren zur katalysierten Umsetzung von Epoxiden und Kohlendioxid zu Copolymeren, die als Ausgangsverbindungen für Schäume, Klebstoffe, Verbundwerkstoffe, Fasern und Faserbestandteile, Folien, Membranen beziehungsweise Membranbestandteile und Harze genutzt werden. Derartige Verfahren werden beispielsweise in DE 197 37 547 A1 beschrieben. Als Katalysatorsystem wird dabei ein Gemisch aus mindestens zwei Dicarbonsäuren und einer anorganischen Zinkverbindung eingesetzt.

WO 2004/087788 A1 beschreibt ein Verfahren zur Polyolherstellung, das den Schritt der Reaktion eines Initiators mit einem Alkylenoxid in Gegenwart eines DMC-Katalysators und eines sterisch gehinderten "chain transfer agent" umfasst, wobei der "chain transfer agent" das wachsende Polyolpolymer protonieren kann.

US 5,026,676 beschreibt einen Zinkcarboxylat-Katalysator für die Copolymerisation von Kohlendioxid mit Epoxiden, der durch Umsetzung von Zinkoxid mit Glutarsäure oder Adipinsäure in einem aprotischen Lösungsmittel hergestellt wird.

EP 0 222 453 A2 beschreibt ein Verfahren zur Herstellung von Polycarbonat, das die Reaktion einer Epoxy-Verbindung mit Kohlendioxid umfasst und in Gegenwart eines DoppelmetallcyanidKomplexes durchgeführt wird. Der Doppelmetallcyanidkomplex enthält als mögliche Liganden ein(en) Alkohol, Ester, Aldehyd, Keton, Ether, Amid, Nitril, Sulfid oder ein Gemisch davon.

Ferner umfasst die allgemeine Formel des Doppelmetallcyanidkomplexes einen Kohlenwasserstoff.

Gegenstand von EP 0 700 949 A2 sind Doppelmetallcyanid-Katalysatoren (DMC-Katalysatoren), die einen DMC-Komplex, einen organischen Komplexbildner und, bezogen auf die Katalysatormenge, 5 -80 Gew.-% eines Polyethers mit einem zahlenmittleren Molekulargewicht von mehr als etwa 500 umfassen.

CN 1459332 A beschreibt einen DMC-Katalysator, der neben einem DoppelmetallcyanidKomplex ein lösliches Metallsalz, einen organischen Komplexbildner und ein Organopolysiloxan sowie gegebenenfalls ein Polyetherpolyol umfasst US2007/0191216 beschreibt DMC-Katalysatoren, die Alkohole als Komplexbildner tragen, für die Polymerisation von Alkylenoxiden.

Es besteht ein anhaltender Bedarf an Katalysatoren, welche die Polymerisation von Epoxiden effizient katalysieren, um somit ein kostengünstiges Verfahren zur Herstellung von Epoxidbasierten Polymeren zu ermöglichen.

Aufgabe der vorliegenden Erfindung ist es daher, ein Katalysatorsystem zur Verfügung zu stellen, das eine effektive Reaktionsführung mit hohen Turn-over-Frequencies (TOF) und/oder Turn-over-Numbers (TON) bei der Herstellung von Homo- und/oder Copolymeren aus Epoxiden und gegebenenfalls weiteren Monomeren ermöglicht.

Die Aufgabe wird erfindungsgemäß durch einen speziell aufgebauten Katalysator gelöst. Gegenstand der vorliegenden Erfindung ist daher ein Katalysator zur Katalyse der Polymerisation von Epoxiden, erhältlich durch Mischen
a) mindestens einer Doppelmetallcyanidverbindung,
b) mindestens eines organischen Komplexbildners, ausgewählt aus Ethanol, i-Propylalkohol, n-Butylalkohol, i-Butylalkohol, sec-Butylalkohol, tert-Butylalkohol, Monoglyme, Diglyme, 1,4-Dioxan, Furan und Mischungen aus zwei oder mehr der genannten Verbindungen und
c) mindestens eines primären Alkohols mit 20 C-Atomen.

Bei dem organischen Komplexbildner und dem primären Alkohol mit 20 C-Atomen handelt es sich um unterschiedliche Verbindungen.

Der Begriff "Polymerisation von Epoxiden" umfasst im Sinne der vorliegenden Erfindung sowohl die Homopolymerisation als auch die Copolymerisation von Epoxiden und damit beispielsweise die Copolymerisation unterschiedlicher Epoxide untereinander sowie die Copolymerisation eines oder mehrerer Epoxide mit Kohlendioxid. Ein erfindungsgemäßer Katalysator zeigt eine hervorragende katalytische Aktivität bei der Polymerisation von Epoxiden und ermöglicht daher ein effizientes und wirtschaftliches Verfahren zur Herstellung entsprechender Homo- und/oder Copolymere, zum Beispiel von Polyethern, Polycarbonaten oder Poly[ether]-polycarbonaten.

Unter "Epoxiden" werden organische Verbindungen verstanden, die mindestens eine EpoxidGruppe enthalten. Epoxide zur Umsetzung im Sinne der vorliegenden Erfindung, das heißt unter Verwendung des erfindungsgemäßen Katalysators, sind beispielsweise Ethylenoxid, 1,2-Propylenoxid, Epichlorhydrin, 1,2-Butylenoxid, 1,2-Pentylenoxid, Isopentylenoxid, 1,2-Hexylenoxid, 1,2-Heptylenoxid, Methylglycidylether, Ethylglycidylether, Allylglycidylether, Phenylglycidylether, Butadienmonooxid, Isoprenmonooxid, Tolylglycidylether, Cyclohexenoxid, Cyclooctanepoxid, Cyclododecanepoxid, (+)-cis-Limonenoxid, (+)-cis, trans-Limonenoxid und (-)-cis, trans-Limonenoxid; wobei Ethylenoxid, 1,2-Propylenoxid, Cyclohexenoxid, Cyclooctanepoxid, Cyclododecanepoxid, (+)-cis-Limonenoxid, (+)-cis, trans-Limonenoxid, (-)-cis, trans-Limonenoxid besonders bevorzugt werden. Insbesondere wird 1,2-Propylenoxid, das üblicherweise auch einfach als Propylenoxid bezeichnet wird, bevorzugt.

Der Begriff "Mischen" umfasst erfindungsgemäß das Inkontaktbringen von Edukten derart, dass diese eine chemische Reaktion miteinander eingehen oder in physikalische Wechselwirkung miteinander treten können, beispielsweise durch Ausbildung einer Komplexverbindung, die synonym auch als Koordinationsverbindung bezeichnet werden kann.

Unter einer Doppelmetallcyanidverbindung wird eine anorganische Verbindung verstanden, die Cyanidionen und eine bestimmte Anzahl zweier verschiedener Metallionen enthält. Die Metallionen können sich dabei im Metall selbst oder in ihrer Oxidationszahl unterscheiden. Dies bedeutet, dass entweder Ionen zweier unterschiedlicher Metalle vorliegen oder dass es sich um Ionen ein- und desselben Metalls handelt, die aber in unterschiedlichen Oxidationsstufen vorliegen.

Bevorzugt ist die Doppelmetallcyanidverbindung erhältlich durch Mischen mindestens eines Salzes der allgemeinen Formel (1a)

M¹_{d'}X_{g'} (1a),

worin M¹ ein Zn-, Fe-, Co-, Mn-, Cu-, Sn-, Pb- oder Ni-Ion ist, X ein Anion ist und d' und g' ganze Zahlen > 0 sind und solche Werte annehmen, dass das Salz M¹_{d'}X_{g'} elektroneutral ist, mit mindestens einem Komplex der allgemeinen Formel (1b)

M⁴_{h'}[M²(CN)_{e'}]_{f'} (1b),

worin M⁴ ein Alkalimetall-Ion ist, M² ein Co-, Cr-, Mn-, Ir-, Rh-, Ru-, V- oder Fe-Ion ist und h', e' und f' ganze Zahlen > 0 sind und solche Werte annehmen, dass der Komplex M⁴_{h'}[M²(CN)_{e'}]_{f'} elektroneutral ist.

Besonders bevorzugt ist M¹ ein Zn-, Fe- oder Ni-Ion und ganz besonders bevorzugt ein Zn-Ion. M² ist besonders bevorzugt ein Co- oder Fe-Ion und ganz besonders bevorzugt ein Co-Ion. M⁴ ist besonders bevorzugt ein K-Ion. X ist besonders bevorzugt ein Halogenid-ion und ganz besonders bevorzugt ein Chlorid-Ion. Insbesondere ist die Doppelmetallcyanidverbindung erhältlich durch Mischen von ZnCl₂ mit K₃(Co(CN)₆)₃.

Unter einem organischen Komplexbildner wird eine organische Verbindung verstanden, die über eine als Elektronendonor wirkende funktionelle Gruppe verfügt und daher in der Lage ist, eine Koordinationsstelle an einem metallischen Zentralatom beziehungsweise Zentralion zu besetzen. Im Sinne der vorliegenden Erfindung als organische Komplexbildner geeignete Verbindungen weisen zudem vorzugsweise eine gewisse Löslichkeit in Wasser auf. Der organische Komplexbildner ist ausgewählt aus Ethanol, i-Propylalkohol, n-Butylalkohol, i-Butylalkohol, sec-Butylalkohol, tert-Butylalkohol, Monoglyme, Diglyme, 1,4-Dioxan, Furan und Mischungen aus zwei oder mehr der genannten Verbindungen. Ganz besonders bevorzugt ist der organische Komplexbildner tert-Butylalkohol oder Monoglyme.

Unter einem primären Alkohol wird ein Alkohol verstanden, dessen OH-Gruppe als -CH₂-OH-Gruppe vorliegt. Bei dem primären Alkohol mit 20 C-Atomen kann es sich sowohl um einen gesättigten als auch um einen ungesättigten Alkohol handeln. Von dem Begriff "ungesättigter Alkohol" sind Alkohole umfasst, die eine oder mehrere Doppel- beziehungsweise Dreifachbindung(en) tragen, wobei der Alkohol auch eine Kombination von Doppel- und Dreifachbindungen enthalten kann. Ganz besonders bevorzugt ist der primäre Alkohol 2-Octyldodecanol Der erfindungsgemäße Katalysator entspricht bevorzugt der allgemeinen Formel (2)

M¹_{d}[M²(CN)ₑ]_{f} * x M³(X)_{g} * y H₂O* zL* a A (2),

worin M¹ ein Zn-, Fe-, Co-, Ni-, Mn-, Cu-, Sn- oder Pb-Ion ist,
M² ein Co-, Fe-, Cr-, Mn-, Ir-, Rh-, Ru- oder V-Ion ist,
M³ ein Zn-, Fe-, Co-, Ni-, Mn-, Cu-, Sn-, Pb-, Cr-, Ir-, Rh-, Ru- oder V-Ion ist,
X ein Anion ist, L ein organischer Komplexbildner ist und A ein primärer Alkohol mit 20 C-Atomen ist,
d, e, f und g ganze Zahlen > 0 sind und solche Werte annehmen, dass der Komplex M¹_{d}[M²(CN)ₑ]_{f} * x M³(X)_{g} elektroneutral ist, und
0,1 ≤ x ≤ 5; 0,1 ≤ y ≤ 1; 0,1 ≤ z ≤ 1 und 0,01 ≤ a ≤ 5 gilt.

In der allgemeinen Formel (2) sind x, y, z und a dahingehend zu verstehen, dass sie den durchschnittlichen stoffmengenmäßigen Anteil des jeweiligen Bestandteils, bezogen auf einen (einzigen) Komplex M¹_{d}[M²(CN)ₑ]_{f}, angeben. Die ganzen Zahlen d, e, f und g hingegen haben eine stöchiometrische Bedeutung, die auf den Komplex M¹_{d}[M²(CN)ₑ]_{f} * M³(X)_{g} beschränkt ist und innerhalb dieses Komplexes einen vollständigen Ladungsausgleich abbildet.

M¹ und M³ sind unabhängig voneinander bevorzugt ein Zn-, Fe- oder Ni-Ion, und bevorzugt gilt M¹ = M³. M² ist bevorzugt ein Co- oder Fe-Ion. Besonders bevorzugt ist M¹ ein Zn-Ion und M² ein Co-Ion. Insbesondere ist der Komplex M¹_{d}[M²(CN)ₑ]_{f} bevorzugt ein Zinkhexacyanocobaltat(III). X ist bevorzugt ein Halogenid-Ion, besonders bevorzugt CI⁻. Bezüglich des organischen Komplexbildners L und des primären Alkohols A gilt hinsichtlich bevorzugter Vertreter das oben Gesagte. Der primäre Alkohol A kann in der allgemeinen Formel (2) auch deprotoniert, das heißt als Alkoholat, vorliegen. Das Alkoholat gilt diesbezüglich als von dem Begriff "Alkohol" umfasst.

Vorzugsweise beträgt der Gesamtgewichtsanteil des/der organischen Komplexbildner(s) und des/der primären Alkohols/Alkohole am erfindungsgemäßen Katalysator 15 bis 50 Gew.-%, stärker bevorzugt 20 bis 40 Gew.-%, bezogen auf das Gesamtgewicht des Katalysators. Unter "Gesamtgewichtsanteil" wird die Summe der Gewichtsanteile des/der organischen Komplexbildner(s) und des/der primären Alkohols/Alkohole verstanden.

Das Mischen der Bestandteile zur Herstellung des erfindungsgemäßen Katalysators erfolgt bevorzugt in Wasser.

Ein weiterer Gegenstand der vorliegenden Erfindung ist ein Verfahren zur Herstellung des erfindungsgemäßen Katalysators, das
- das Mischen mindestens eines Salzes der allgemeinen Formel (1a)

   M¹_{d'}X_{g'} (1a),

   worin M¹ ein Zn-, Fe-, Co-, Mn-, Cu-, Sn-, Pb- oder Ni-Ion ist, X ein Anion ist und
   d' und g' ganze Zahlen > 0 sind und solche Werte annehmen, dass das Salz
   M¹_{d'}X_{g'} elektroneutral ist, mit
   mindestens einem Komplex der allgemeinen Formel (1b)

   M⁴_{h'[}M²(CN)_{e'}]_{f'} (1b),

   worin M⁴ ein Alkalimetall-Ion ist, M² ein Co-, Cr-, Mn-, Ir-, Rh-, Ru-, V- oder Fe-Ion ist und h', e' und f' ganze Zahlen > 0 sind und solche Werte annehmen, dass der Komplex M⁴_{h'}[M²(CN)_{e'}]_{f'} elektroneutral ist,
   mit mindestens einem organischen Komplexbildner L und mindestens einem primären Alkohol A mit 20 C-Atomen in wässriger Dispersion,

- das Abtrennen der entstandenen festen Phase,
- das mindestens einmalige Inkontaktbringen der festen Phase mit einer wässrigen Dispersion von L und A sowie
- das Isolieren des erhaltenen Reaktionsprodukts
umfasst. Für den organischen Komplexbildner L und den primären Alkohol A sowie für M¹, M² und M⁴ gelten dabei die oben angegebenen Bedeutungen und Bevorzugungen.

Vorzugsweise wird die feste Phase nach dem Abtrennen von der wässrigen Dispersion mindestens zweimal, stärker bevorzugt mindestens dreimal mit einer wässrigen Dispersion von L und A in Kontakt gebracht. "In Kontakt bringen" bedeutet dabei, dass die Edukte in einer Art und Weise zusammengebracht werden, die eine chemische Reaktion oder das Eingehen einer physikalischen Wechselwirkung erlaubt.

Ein weiterer Gegenstand der vorliegenden Erfindung ist ein Verfahren zur Polymerisation von Epoxid, das dadurch gekennzeichnet ist, dass mindestens ein Epoxid in Gegenwart mindestens eines erfindungsgemäßen Katalysators zur Polymerisation gebracht wird. Der Begriff "Polymerisation" umfasst dabei sowohl die Homopolymerisation als auch die Copolymerisation von Epoxid(en). Bevorzugt ist das erfindungsgemäße Verfahren ein Verfahren zur Copolymerisation von mindestens einem Epoxid und Kohlendioxid CO₂). In diesem Fall erfolgt die Polymerisation in Gegenwart von Kohlendioxid, das der Reaktionsmischung prinzipiell in fester, flüssiger oder gasförmiger Form zugegeben werden kann. Vorzugsweise erfolgt eine Zudosierung in flüssiger oder gasförmiger Form. Ein derartiges Verfahren kann beispielsweise zur Herstellung von Polycarbonat angewendet werden.

Das stoffmengenbezogene Verhältnis Substrat: Katalysator beträgt im Rahmen der vorliegenden Erfindung vorzugsweise von 100 : 1 bis 10.000.000 : 1, stärker bevorzugt von 1.000 : 1 bis 5.000.000 : 1.

Das erfindungsgemäße Verfahren wird vorzugsweise bei Temperaturen von 0 bis 300°C, stärker bevorzugt von 25 bis 200°C, besonders bevorzugt von 50 bis 160°C, insbesondere von 60 bis 140°C durchgeführt.

Bevorzugt wird das erfindungsgemäße Verfahren in Gegenwart mindestens eines Lösungsmittels durchgeführt. Das Lösungsmittel liegt dabei vorzugsweise mindestens in einer solchen Menge vor, dass das zu polymerisierende Epoxid beziehungsweise die zu polymerisierenden Epoxide darin dispergiert ist/sind. Bevorzugt ist das Lösungsmittel eine polare, OH-Gruppen-freie Verbindung. Geeignete Lösungsmittel sind beispielsweise halogenhaltige Lösungsmittel wie Dichlormethan, Trichlormethan, Tetrachlorkohlenstoff, 1,1-Dichlorethan, 1,2-Dichlorethan; einfach - bzw. mehrfach halogenierte Alkane und Alkene; Aromaten wie Toluen; Xylene beziehungsweise deren einfach oder mehrfach halogenierte Derivate wie Bromtoluen, Chlortoluen, Dichlortoluen, Chlorbenzen; Ether wie Diethylether, Dipropylether, cyclische Ether wie Tetrahydrofuran und Dioxan; Nitrile wie beispielsweise Acetonitil und Acrylnitril; Ketone wie beispielsweise Aceton und Butanon, Mono- und Diarylketone; Cycloalkane und Cycloalkene; Ester wie Essigsäureethylester sowie Gemische aus zwei oder mehr der vorstehend aufgeführten Lösungsmittel. Vorzugsweise ist das Lösungsmittel ausgewählt aus Nitrilen, Estern und halogenhaltigen Kohlenwasserstoffen, insbesondere aus Dichlormethan, Trichlormethan, Bromtoluen, Chlortoluen, Dichlortoluen, Chlorbenzen, Acetonitril, Acrylnitril und Essigsäureethylester. Besonders bevorzugt ist das Lösungsmittel ausgewählt aus Dichlormethan, Trichlormethan, Acetonitril und Essigsäureethylester, und ganz besonders bevorzugt ist das Lösungsmittel Dichlormethan. Der Wassergehalt des beziehungsweise der eingesetzten Lösungsmittel(s) beträgt bevorzugt weniger als 0,05 Vol%, bezogen auf das Gesamtvolumen des/der eingesetzten Lösungsmittel(s).

Ein weiterer Gegenstand der vorliegenden Anmeldung ist die Verwendung eines erfindungsgemäßen Katalysators zur Polymerisation mindestens eines Epoxids. Der Begriff "Polymerisation" umfasst dabei sowohl Homopolymerisation als auch Copolymerisation. Erfindungsgemäß bevorzugt ist die Verwendung eines erfindungsgemäßen Katalysators zur Copolymerisation mindestens eines Epoxids mit Kohlendioxid.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung und der erfindungsgemäßen Verwendungen in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

### Beispiele

### Herstellung erfindungsgemäßer Katalysatoren

### Beispiel 1

### (Verwendung von Eutanol G = 2-Octyldodecan-1-ol)

Eine Lösung von 6,25 g Zinkchlorid in 10 ml destilliertem Wasser gibt man unter starkem Rühren (20.000 U/min) zu einer Lösung aus 2 g Kaliumhexacyanocobaltat und 1g Aerosil 380 in 35 ml destilliertem Wasser. Eine Mischung aus 25 g t-Butanol in 25 ml destilliertem Wasser wird zu der Dispersion gegeben und 10 min stark (20.000 U/min) gerührt. Eine Mischung aus 0,5 g Eutanol G und 0,5 g t-Butanol in 50 ml destilliertem Wasser gibt man dazu und rührt 3 min bei 1000 U/min.

Der entstandene Feststoff wird isoliert und mit einer Mischung aus 35 g t-Butanol und 0,5 g Eutanol G in 15 ml destilliertem Wasser 10 min gerührt (10.000 U/min). Anschließend wird filtriert und der Filterkuchen mit einer Mischung aus 50 g t-Butanol und 0,25 g Eutanol G 10 min gerührt (10.000 U/min). Es wird erneut filtriert, und der Rückstand wird am Rotationsverdampfer bei vermindertem Druck eingeengt.

Man erhält einen pulverförmigen weißen Feststoff.

### Beispiel 2 (nicht erfindungsgemäss)

### (Verwendung von 1-Dodecanol)

Eine Lösung von 6,25 g Zinkchlorid in 10 ml destilliertem Wasser gibt man unter starkem Rühren (20.000 U/min) zu einer Lösung aus 2 g Kaliumhexacyanocobaltat in 35 ml destilliertem Wasser. Eine Mischung aus 25 g t-Butanol in 25 ml destilliertem Wasser wird zu der Suspension gegeben. Anschließend wird 10 min stark (20.000 U/min) gerührt. Dann gibt man eine Mischung aus 0,05 g 1-Dodecanol und 0,50 g t-Butanol in 50 ml destilliertem Wasser dazu und rührt 3 min bei 1000 U/min.

Durch Filtration wird ein Feststoff isoliert und mit einer Mischung aus 35 g t-Butanol und 0,05 g 1-Dodecanol in 15 ml destilliertem Wasser 10 min gerührt (10.000 U/min).

Nach erneuter Filtration wird der Feststoff mit einer Mischung aus 50 g t-Butanol und 0,025 g 1-Dodecanol 10 min gerührt (10.000 U/min).

Nach erneuter Filtration wird der Rückstand bei 50 °C und Normaldruck getrocknet.

Man erhält einen pulverförmigen weißen Feststoff.

### Beispiel 3 (nicht erfindungsgemäss)

### (Verwendung von 10-Undecen-1-ol)

Zu einer Lösung aus 3 g Zinkchlorid in 5 ml destilliertem Wasser gibt man unter starkem Rühren (20.000 U/min) eine Lösung aus 1 g Kaliumhexacyanocobaltat in 18 ml destilliertem Wasser bei einer Temperatur von 60 °C. Eine Lösung aus 0,93 g Kaliumhydroxid in 10 ml destilliertem Wasser wird zugegeben und 5 min gerührt.

Man fügt eine Mischung aus 16 ml t-Butanol in 12,5 ml destilliertem Wasser zu der Suspension hinzu. Nach 10 min starkem Rühren (20.000 U/min) bei 60 °C wird eine Mischung aus 0,4 ml t-Butanol und 0,022 g 10-Undecen-1-ol in 25 ml destilliertem Wasser hinzu gegeben und 3 min bei 1000 U/min gerührt.

Durch Filtration wird der Feststoff isoliert und mit einer Mischung aus 22,5 ml t-Butanol und 0,022 g 10-Undecen-1-ol in 7,5 ml destilliertem Wasser 10 min bei 60 °C gerührt (10.000 U/min). Anschließend wird filtriert, und der erhaltene Rückstand wird mit einer Mischung aus 32 ml t-Butanol und 0,011 g 10-Undecen-1-ol bei 60 °C 10 min gerührt (10.000 U/min). Der Feststoff wird isoliert und bei 50 °C und Normaldruck getrocknet.

Ausbeute: 1,36 g (pulverförmiger weißer Feststoff).

### Beispiel 4

### (Verwendung von Eutanol G = 2-Octyldodecan-1-ol)

Eine Lösung von 3 g Zinkchlorid in 30 ml destilliertem Wasser gibt man unter starkem Rühren (7.000 U/min) zu einer Lösung aus 0,5 g Kaliumhexacyanocobaltat und 0,1 g Eutanol G in 20 ml destilliertem Wasser. Unmittelbar nach beendeter Zugabe wird eine Lösung von 13 g t-Butanol in 13 ml destilliertem Wasser zu der Dispersion gegeben und 10 min stark (7.000 U/min) gerührt. Der entstandene Feststoff wird isoliert und mit einer Mischung aus 1 g t-Butanol und 0,05 g Eutanol G in 25 ml destilliertem Wasser 20 min gerührt (7.000 U/min). Anschließend wird der Feststoff wieder abgetrennt und mit einer Mischung aus 20 g t-Butanol und 0,05 g Eutanol G in 10 ml destilliertem Wasser 20 min gerührt (7.000 U/min). Der Feststoff wird erneut abgetrennt und mit einer Mischung 0,05 g Eutanol G in 25 g t-Butanol 20 min gerührt (7.000 U/min). Es wird erneut filtriert, und der Rückstand wird am Rotationsverdampfer bei vermindertem Druck eingeengt.

Man erhält einen pulverförmigen weißen Feststoff.

### Homopolymerisation von Propylenoxid

### Beispiel 5 (nicht erfindungsgemäss) (1-L-Autoklav)

In einem 1l-Rührautoklaven werden 24 g Tripropylenglykol (192,3 g/mol) eingewogen, dreimal sekuriert und unter Vakuum (< 0,1 mbar) bei 70 °C eine Stunde gerührt und ausgeheizt. Nach dem Abkühlen werden 0,1 g des DMC-Katalysators aus Beispiel 2 (200 ppm) zugegeben, dreimal sekuriert, 20 g Propylenoxid (PO) zudosiert und unter Rühren auf 120 °C erwärmt. Bei 120 °C startet die Polymerisation mit starkem Temperaturanstieg und beschleunigtem Druckabfall. Die verbleibende Menge an PO (456 g) wird bei einer Temperatur von 110 - 125 °C zudosiert. Nach vollständigem PO-Verbrauch wird eine Stunde bei 120 °C gerührt.

Ausbeute: 500 g Polyetherpolyol.

### Beispiel 6 (nicht erfindungsgemäss) (100-ml-Autoklav)

27 g ausgeheiztes Desmophen 2061BD (Polypropylenglykol mit einem Molekulargewicht von ca. 2000 g/mol, erhältlich von der Firma Bayer MaterialScience AG) und 15 mg DMC-Katalysator aus Beispiel 3 wurden in den 100ml-Autoklav gegeben, 3 x sekuriert und auf 110 °C unter Rühren (1000 U/min) erhitzt. Bei 110 °C wurden 7,2 ml PO zudosiert. Der Druck stieg auf 3,5 bar. Nach einer Induktionszeit von 30 Minuten wurden ein beschleunigter Druckabfall und ein rasanter Temperaturanstieg auf 150°C beobachtet.

Ausbeute: 34 g Polyetherpolyol.

### Beispiel 7 (100-ml-Autoklav)

27 g ausgeheiztes Desmophen 2061BD (Polypropylenglykol mit einem Molekulargewicht von ca. 2000 g/mol, erhältlich von der Firma Bayer MaterialScience AG) und 15 mg DMC-Katalysator aus Beispiel 4 wurden in den 100ml-Autoklav gegeben, 3 x sekuriert und auf 110 °C unter Rühren (1000 U/min) erhitzt. Bei 110 °C wurden 7,2 ml PO zudosiert. Der Druck stieg auf 3,5 bar. Nach einer Induktionszeit von 7 Minuten wurden ein beschleunigter Druckabfall und ein rasanter Temperaturanstieg auf 170°C beobachtet.

Ausbeute: 34 g Polyetherpolyol.

## Patentansprüche

1. Katalysator zur Katalyse der Polymerisation von Epoxiden, erhältlich durch Mischen
a) mindestens einer Doppelmetallcyanidverbindung,
b) mindestens eines organischen Komplexbildners, ausgewählt aus Ethanol, i-Propylalkohol, n-Butylalkohol, i-Butylalkohol, sec-Butylalkohol, tert-Butylalkohol, Monoglyme, Diglyme, 1,4-Dioxan, Furan und Mischungen aus zwei oder mehr der genannten Verbindungen und
c) mindestens eines primären Alkohols mit 20 C-Atomen.

2. Katalysator gemäß Anspruch 1, **dadurch gekennzeichnet, dass** die Doppelmetallcyanidverbindung erhältlich ist durch Umsetzung mindestens eines Salzes der allgemeinen Formel (1a)
M¹_{d'}X_{g'} (1a),
worin M¹ ein Zn-, Fe-, Co-, Mn-, Cu-, Sn-, Pb- oder Ni-Ion ist, X ein Anion ist und d' und g' ganze Zahlen > 0 sind und solche Werte annehmen, dass das Salz M¹_{d'}X_{g'} elektroneutral ist, mit
mindestens einem Komplex der allgemeinen Formel (1b)
M⁴_{h'}[M²(CN)_{e'}]_{f'}, (1b),
worin M⁴ ein Alkalimetall-Ion ist, M² ein Co-, Cr-, Mn-, Ir-, Rh-, Ru-, V- oder Fe-Ion ist und h', e' und f' ganze Zahlen > 0 sind und solche Werte annehmen, dass der Komplex M⁴_{h'}[M²(CN)_{e'}]_{f'} elektroneutral ist.

3. Katalysator gemäß Anspruch 1 oder 2, **dadurch gekennzeichnet, dass** der Katalysator der allgemeinen Formel (2) entspricht
M¹_{d}[M²(CN)ₑ]_{f} * x M³(X)_{g} * y H₂O * zL * aA (2),
worin M¹ ein Zn-, Fe-, Co-, Ni-, Mn-, Cu-, Sn- oder Pb-Ion ist,
M² ein Co-, Fe-, Cr-, Mn-, Ir-, Rh-, Ru- oder V-Ion ist,
M³ ein Zn-, Fe-, Co-, Ni-, Mn-, Cu-, Sn-, Pb-, Cr-, Ir-, Rh-, Ru- oder V-Ion ist,
X ein Anion ist, L ein organischer Komplexbildner ist und A ein primärer Alkohol mit 20 C-Atomen ist,
d, e, f und g ganze Zahlen > 0 sind und solche Werte annehmen, dass der Komplex M¹_{d}[M²(CN)ₑ]_{f} * x M³(X)_{g} elektroneutral ist, und
0,1 ≤ x ≤ 5; 0,1 ≤ y ≤ 1; 0,1 ≤ z ≤ 1 und 0,01 ≤ a ≤ 5 gilt.

4. Katalysator gemäß mindestens einem der vorstehenden Ansprüche, **dadurch gekennzeichnet, dass** der Gesamtgewichtsanteil an organischem Komplexbildner und primärem Alkohol 15 bis 50 Gew.-%, bezogen auf das Gesamtgewicht des Katalysators, beträgt.

5. Verfahren zur Polymerisation von Epoxiden, **dadurch gekennzeichnet, dass** mindestens ein Epoxid in Gegenwart mindestens eines Katalysators gemäß mindestens einem der vorstehenden Ansprüche zur Polymerisation gebracht wird.

6. Verfahren gemäß Anspruch 5, **dadurch gekennzeichnet, dass** das Verfahren in Gegenwart mindestens eines Lösungsmittels durchgeführt wird.

7. Verfahren gemäß mindestens einem der Ansprüche 5 und 6, **dadurch gekennzeichnet, dass** das Verfahren als Verfahren zur Copolymerisation von mindestens einem Epoxid und Kohlendioxid durchgeführt wird.

8. Verwendung eines Katalysators gemäß mindestens einem der Ansprüche 1 bis 4 zur Polymerisation mindestens eines Epoxids.

## Claims

1. A catalyst for catalyzing the polymerization of epoxides, which catalyst can be obtained by mixing
a) at least one double metal cyanide compound,
b) at least one organic complexing agent, selected from ethanol, i-propyl alcohol, n-butyl alcohol, i-butyl alcohol, sec-butyl alcohol, tert-butyl alcohol, monoglyme, diglyme, 1,4-dioxane, furan and mixtures of two or more of the aforementioned compounds, and
c) at least one primary alcohol having 20 C atoms.

2. The catalyst according to claim 1, **characterized in that** the double metal cyanide compound can be obtained by reacting at least one salt of general formula (1a)
M¹_{d'}X_{g'} (1a),
where M¹ is a Zn, Fe, Co, Mn, Cu, Sn, Pb or Ni ion, X is an anion and d' and g' are integers of > 0 and assume values such that the salt M¹_{d'}X_{g'} is electroneutral, with
at least one complex of general formula (1b)
M⁴_{h'}[M²(CN)_{e'}]_{f'} (1b),
where M⁴ is an alkali metal ion, M² is a Co, Cr, Mn, Ir, Rh, Ru, V or Fe ion and h', e' and f' are integers of > 0 and assume values such that the complex M⁴_{h'[}M²(CN)_{e'}]_{f'} is electroneutral.

3. The catalyst according to claim 1 or claim 2, **characterized in that** the catalyst corresponds to general formula (2)
M¹_{d}[M²(CN)ₑ]_{f} * x M³(X)_{g} * y H₂O * z L * a A (2),
where M¹ is a Zn, Fe, Co, Ni, Mn, Cu, Sn or Pb ion,
M² is a Co, Fe, Cr, Mn, Ir, Rh, Ru or V ion,
M³ is a Zn, Fe, Co, Ni, Mn, Cu, Sn, Pb, Cr, Ir, Rh, Ru or V ion,
X is an anion, L is an organic complexing agent and A is a primary alcohol having 20 C atoms, d, e, f and g are integers of > 0 and assume values such that the complex
M¹_{d}[M²(CN)ₑ]_{f} * x M³(X)_{g} is electroneutral, and
0.1 ≤ x ≤ 5; 0.1 ≤ y ≤ 1; 0.1 ≤ z ≤ 1; and 0.01 ≤ a ≤ 5.

4. The catalyst according to at least one of the preceding claims, **characterized in that** the total weight proportion of the organic complexing agent and the primary alcohol is 15 to 50 wt.%, based on the total weight of the catalyst.

5. A method for polymerizing epoxides, **characterized in that** at least one epoxide is polymerized in the presence of at least one catalyst according to at least one of the preceding claims.

6. The method according to claim 5, **characterized in that** the method is carried out in the presence of at least one solvent.

7. The method according to at least one of claims 5 and 6, **characterized in that** the method is carried out as a method for copolymerizing at least one epoxide and carbon dioxide.

8. The use of a catalyst according to at least one of claims 1 to 4 for polymerizing at least one epoxide.

## Revendications

1. Catalyseur destiné à la catalyse de la polymérisation d'époxydes, pouvant être obtenu par mélange
a) d'au moins un composé cyanure métallique double,
b) d'au moins un agent complexant organique choisi parmi l'éthanol, l'alcool i-propylique, l'alcool n-butylique, l'alcool i-butylique, l'alcool sec-butylique, l'alcool tert-butylique, le monoglyme, le diglyme, le 1,4-dioxane, le furane et des mélanges de deux ou plus des composés susmentionnés et
c) au moins un alcool primaire ayant 20 atomes de carbone.

2. Catalyseur selon la revendication 1, **caractérisé en ce que** le composé cyanure métallique double peut être obtenu en faisant réagir au moins un sel de formule générale (1a)
M¹_{d'}X_{g'} (1a),
dans laquelle M¹ est un ion Zn, Fe, Co, Mn, Cu, Sn, Pb ou Ni, X est un anion et d'et g' sont des entiers > 0 et prennent des valeurs telles que le sel M¹_{d'}X_{g'} est neutre électroniquement, avec
au moins un complexe de la formule générale (1b)
M⁴_{h'}[M²(CN)_{e'}]_{f'}, (1b),
dans laquelle M⁴ est un ion de métal alcalin, M² est un ion Co, Cr, Mn, Ir, Rh, Ru, V ou Fe et h', e' et f' sont des entiers > 0 et prennent des valeurs telles que le complexe M⁴_{h'}[M²(CN)_{e'}]_{f'} soit neutre électroniquement.

3. Catalyseur selon la revendication 1 ou 2, **caractérisé en ce que** le catalyseur correspond à la formule générale (2)
M¹_{d}[M²(CN)ₑ]_{f} * x M³(X)_{g} * y H₂O * zL * a A (2),
dans laquelle M¹ est un ion Zn, Fe, Co, Ni, Mn, Cu, Sn ou Pb,
M² est un ion Co, Fe, Cr, Mn, Ir, Rh, Ru ou V,
M³ est un ion Zn, Fe, Co, Ni, Mn, Cu, Sn, Pb, Cr, Ir, Rh, Ru ou V,
X est un anion, L est un agent complexant organique et A est un alcool primaire ayant 20 atomes de carbone, d, e, f et g sont des entiers > 0 et prennent des valeurs telles que le complexe
M¹_{d}[_{M}²(CN)ₑ]_{f} * x M³(X)_{g} est neutre électroniquement, et
vaut 0,1 ≤ x ≤ 5 ; 0,1 ≤ y ≤ 1 ; 0,1 ≤ z ≤ 1 et 0,01 ≤ a ≤ 5.

4. Catalyseur selon au moins une des revendications précédentes, **caractérisé en ce que** la fraction pondérale totale en agent complexant organique et en alcool primaire représente de 15 à 50 % en poids, rapporté au poids total du catalyseur.

5. Procédé de polymérisation d'époxydes, **caractérisé en ce qu'**au moins un époxyde est mis en polymérisation en présence d'au moins un catalyseur selon au moins une des revendications précédentes.

6. Procédé selon la revendication 5, **caractérisé en ce que** le procédé est réalisé en présence d'au moins un solvant.

7. Procédé selon au moins une des revendications 5 et 6, **caractérisé en ce que** le procédé est réalisé en tant que procédé de copolymérisation d'au moins un époxyde et de dioxyde de carbone.

8. Utilisation d'un catalyseur selon au moins une des revendications 1 à 4 pour la polymérisation d'au moins un époxyde.
